# EUROPEAN PATENT SPECIFICATION

(11) **EP 2 222 763 B1**
(45) Date of publication and mention of the grant of the patent: **13.04.2016**
(21) Application number: 08867180.5
(22) Date of filing: 19.12.2008
(51) Int. Cl.: C08J 7/04, B05D 7/00, C08L 67/00, C08L 33/06, C08G 18/79, C08G 18/00, C08G 18/42, C08G 18/62, C08G 18/40, C09D 133/06, C09D 167/00, C09D 175/04, C08G 18/72, C09D 175/06, C08K 5/29, C08K 5/5435

(54) **PROCESS FOR PRODUCING A MULTILAYER COATING**
VERFAHREN ZUR HERSTELLUNG EINER MEHRSCHICHTIGEN BESCHICHTUNG
PROCÉDÉ DE PRODUCTION D'UN REVÊTEMENT MULTICOUCHE

(30) Priority: 20.12.2007 US 8602 P
(43) Date of publication of application: 01.09.2010
(73) Proprietor: Coatings Foreign IP Co. LLC, Wilmington, DE 19801 (US)
(72) Inventor: VAES, Ann, B-2500 Koningshooikt (BE); FEY, Thomas, 55128 Mainz (DE)
(74) Representative: Maiwald Patentanwalts GmbH
(86) International application number: PCT/US2008/087555
(87) International publication number: WO 2009/086026

(56) References cited:
- EP-A- 1 834 973
- EP-A2- 0 427 979
- US-A- 5 354 797
- US-A1- 2004 191 555
- US-A1- 2006 014 024
- US-B1- 6 737 468

## Description

### Field of the Invention

The invention relates to a process for producing a multilayer coating from a base coat and a clear coat layer, which process may in particular be used for coating vehicle bodies and vehicle body parts.

### Description of Prior Art

Multilayer coatings made up, for example, of a filler, a base coat and a clear coat layer are typical coating structures in vehicle coating. Similar coating structures, for example based on a primer and a transparent or pigmented top coat layer are also known from other fields of industrial coating.

EP 1050551, for example, accordingly describes aqueous two-component polyurethane systems with improved adhesion and corrosion resistance, which are very suitable for direct coating of metallic substrates, for example vehicle bodies. The aqueous two-component PU system contains an aqueous OH-functional resin dispersion, a polyisocyanate with free isocyanate groups and an epoxy-functional silane component.

EP 1484349 furthermore describes coating compositions for coating plastics, in particular plastics interior parts or plastics exterior attachments for vehicles, the plastics parts comprising a silver plating layer. A base coat composition is disclosed which contains an OH-functional acrylate resin, an organically modified polydimethylsiloxane, an epoxy-functional silane and a polyisocyanate curing agent. A clear coat coating composition is furthermore disclosed which contains an OH-functional acrylate resin, an acrylate resin with tertiary amino groups, a polyisocyanate cross-linking agent and a compound with epoxy groups and with hydrolyzable silane groups. The coating materials are applied onto the plastics substrate in the sequence: base coat, silver plating layer and clear coat. A primer is preferably applied directly onto the plastics substrate before application of the base coat layer.

It is likewise known from WO 02/051899 to use a two-component coating composition containing a polyisocyanate component, an isocyanate-reactive component and a compound with an epoxy group and an alkoxysilane group for pipe coating.

Environmentally friendly water-based coating materials are increasingly being used in vehicle coating. In particular, water-based products are increasingly being used for the color-imparting and/or special effect-imparting base coat materials, which have a relatively high solvent content. When water-borne base coat materials, for example, are used, it is of course essential to guarantee the necessary technological properties of the overall coating structure, such as for example good humidity resistance as well as satisfactory optical properties and drying characteristics. In particular, when water-borne base coat materials are used in the above-stated multilayer structure comprising base coat and clear coat, there is a lack of satisfactory initial wet adhesion between the individual layers after humidity strain, i.e. between base coat and clear coat layer and between a prior coating, for example a filler layer, and the base coat layer. Cohesion within the water-borne base coat layer itself is also unsatisfactory.

It has not hitherto been possible to provide a satisfactory solution to these adhesion problems which does not simultaneously substantially impair other important coating properties, such as the drying characteristics, stability and optical properties of the resultant coatings.

The object of the present invention was thus to provide a process for the multilayer coating of substrates using water-borne base coat materials, which yields a coating structure with very good humidity resistance and adhesion properties, e.g. satisfactory wet and dry interlayer adhesion, in particular with very good initial wet and dry adhesion between a prior coating, for example a filler layer, and the base coat layer and between the base coat and clear coat layer. Cohesive failure within the water-borne base coat layer itself should also not occur. Other important technical coating properties, such as for example the drying characteristics, the optical properties of the resultant coatings, the stability of the compositions and good application properties of the coating composition should not be impaired as a consequence.

US 2006/014024 discloses a multilayer coating film comprising a base coating film containing an epoxy silane, a silver-plating layer and a clear coating layer. The silver-plating layer is formed by applying ammonium silver nitrate and a reactant solution.

### Summary of the Invention

The invention accordingly relates to a process for the multilayer coating of substrates, in particular vehicle bodies and vehicle body parts, comprising the following steps:
1. Applying a base coat layer of a water-based base coat composition containing color-imparting and/or special effect-imparting pigments, one or more binders, water and optionally at least one of the following constituents: crosslinking agents, fillers, conventional coating additives and organic solvents,
   onto an optionally precoated substrate,
2. Applying a clear coat layer of a transparent clear coat coating composition onto the base coat layer and
3. Curing the clear coat layer, optionally together with the base coat layer, wherein the transparent clear coat coating composition being an organic solvent-based coating composition comprising:
   A) at least one binder with functional groups containing active hydrogen,
   B) at least one polyisocyanate cross-linking agent with free isocyanate groups and
   C) at least one epoxy-functional silane of the general Formula (I): 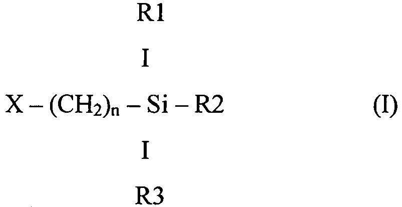
      X denoting the residues 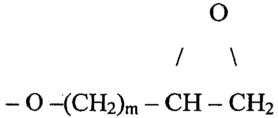 with m being 1-4 or 3,4 - epoxycyclohexyl ,
      R1, R2, R3 mutually independently meaning identical or different organic residues with 1 to 30 carbon atoms per molecule, providing that at least one of the residues is an alkoxy group with 1 to 4 carbon atoms and
      n is 2, 3 or 4, preferably 2 or 3.

It has surprisingly been found that, by using the specific epoxy-functional silane compounds C) in the clear coat coating composition to be used in the process according to the invention, a multilayer structure of a prior coating, for example a filler, a water-borne base coat and a clear coat, is obtained which exhibits excellent adhesion properties, i.e. excellent wet adhesion and excellent high pressure cleaning resistance as well after humidity/temperature strain. In particular the multilayer structure has excellent interlayer adhesion between the prior coating, for example the filler layer and the water-borne base coat layer and between the water-borne base coat layer and the clear coat layer, without consequently impairing other important technical coating properties such as application properties, drying and optical properties. It has surprisingly also proved possible to improve cohesion within the water-borne base coat layer, in particular after exposure to severe conditions, for example in the moist heat test.

### Detailed Description of the Invention

The invention will be explained in greater detail below.

References in the singular may also include the plural (for example, "a" and "an" may refer to one, or one or more) unless the context specifically states otherwise.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard and tetrahydrofurane as the liquid phase.

Water-based coating compositions are coating compositions, wherein water is used as solvent or thinner when preparing and/or applying the coating composition. Usually, water-based coating compositions contain for example 30 to 90% by weight of water, based on the total amount of the coating composition and optionally, up to 20% by weight, preferably, below 15% by weight of organic solvents, based on the total amount of the coating composition.

Accordingly organic solvent-based coating compositions are coating compositions, wherein organic solvents are used as solvents or thinner when preparing and/or applying the coating composition. Usually, solvent-based coating compositions contain for example 20 to 90% by weight of organic solvents, based on the total amount of the coating composition.

The transparent clear coat coating composition used in the process according to the invention will first of all be explained in greater detail.

The clear coat coating composition comprises a "two-component" coating composition, i.e. the components which are reactive towards one another, namely the component comprising active hydrogen (A) and the polyisocyanate component (B), must be stored separately from one another prior to application in order to avoid a premature reaction. Generally binder component A) and polyisocyanate component B) may only be mixed together shortly before application. The term "shortly before application" is well-known to a person skilled in the art. The time period within which the ready-to-use coating composition may be prepared prior to the actual use/application depends, e.g., on the pot life of the coating composition.

In principle, the coating compositions can still be adjusted to spray viscosity with organic solvents prior to application. All the further components which are required for producing a usable coating composition, such as for example pigments, organic solvents and additives, may in each case be present in one of the two components or in both components of the two-component system.

Also, the epoxy-functional silane compounds C) may be present in one of the two components or in both components. Most preferred the epoxy-functional silane compounds C) are present in the polyisocyanate component B).
The clear coat coating composition to be used in the process of the present invention preferably comprises 30 to 70 % by weight solids of the at least one binder with functional groups containing active hydrogen (component A) and 20 to 50 % by weight solids of the at least one curing agent with free isocyanate groups (component B), relative to the total amount of the clear coating composition.

The epoxy-functional silane compounds C) are preferably used in concentrations of 0.25 to 5.0 % by weight solids, in particular of 1.0 to 3.0 % by weight solids and most preferred of 2.0 to 3.0 % by weight solids, relative to the sum of the solids content of component A) and component B). If component C) is used in quantities of greater than 5.0 % by weight solids this leads to inferior viscosity and color stability of the multilayer coating. If component C) is used in quantities of less than 0.25 % by weight solids the described positive effects can not be achieved.

In addition to components A), B) and C) the clear coating composition may contain usual components to be used in coating compositions, such as pigments, additives and organic solvents. The pigments, additives and organic solvents are used in usual quantities known to a skilled person.

Component A) of the clear coating composition comprises binders with functional groups containing active hydrogen. The binders may be oligomeric and/or polymeric compounds with a number average molecular weight (Mn) of, e.g., 500 to 200,000 g/mole, preferably of 1100 to 100,000 g/mole. The functional groups with active hydrogen in particular comprise hydroxyl groups, primary and/or secondary amino groups. Binders with hydroxyl groups are preferably used as component A).

The binders with hydroxyl groups are for example the polyurethanes, (meth)acrylic copolymers, polyesters and polyethers, known from polyurethane chemistry to the skilled person, which are used in the formulation of organic solvent based coating compositions. They may each be used individually or in combination with one another.
Preferably hydroxyl-functional (meth)acrylic copolymers are used as component A).
Examples of (meth)acrylic copolymers include all (meth)acrylic copolymers which are suited for solvent-based coating compositions and known to a skilled person. For example, they can be those with a number average molecular weight Mn of 1000-20000 g/mol, preferably, of 1100-15000, an acid value of 0 - 60 mg KOH/g, preferably, of 0 - 35 and a hydroxyl value of 20-400 mg KOH/g, preferably, of 20-250 mg KOH/g and most preferred of 80-180 mg KOH/g. The (meth)acrylic copolymers can also have been prepared in the presence of different binders, e.g., in the presence of oligomeric or polymeric polyester and/or polyurethane resins.

The preparation of the (meth)acrylic copolymers takes place by usual preparation techniques, e.g., by radical polymerization in the organic phase, in which monomers, solvents and polymerization catalyst are charged into a conventional polymerization reactor.

All glass transition temperatures disclosed herein are determined by DSC (differential scanning calorimetry).
Typically useful polymerization catalysts are azo type catalysts such as azo-bisisobutyronitrile, 1,1'-azo-bis(cyanocylohexane), acetates such as t-butyl peracetate, peroxides such as di-t-butyl peroxide, benzoates such as t-butyl perbenzoate, octoates such as t-butyl peroctoate and the like.
Typical solvents that can be used are ketones such as methyl amyl ketone, methyl isobutyl ketone, methyl ethyl ketone, aromatic hydrocarbons such as toluene, xylene, alkylene carbonates such as propylene carbonate, n-methyl pyrrolidone, ethers, ester, such as butyl acetate, and mixtures of any of the above.

Free-radically polymerizable, olefinically unsaturated monomers, which may be used are monomers which, in addition to at least one olefinic double bond, also contain further functional groups and monomers which, apart from at least one olefinic double bond, contain no further functional groups. Further functional groups may be, for example, urea, hydroxyl, carboxyl, sulfonic acid, silane, amine, amide, acetoacetate or epoxy groups. It would be clear that only those functional groups can be combined in the poly(meth)acrylate copolymer which do not tend to self-crosslink.

Olefinically unsaturated monomers with hydroxyl groups can be used to introduce hydroxyl groups into the (meth)acrylic copolymers. Suitable hydroxy-functional unsaturated monomers are, for example, hydroxyalkyl esters of alpha, beta-olefinically unsaturated monocarboxylic acids with primary or secondary hydroxyl groups. These may, for example, comprise the hydroxyalkyl esters of acrylic acid, methacrylic acid, crotonic acid and/or isocrotonic acid. The hydroxyalkyl esters of (meth)acrylic acid are preferred. The hydroxyalkyl residues may contain, for example, 2-10 C atoms, preferably, 2-6 C atoms. Examples of suitable hydroxyalkyl esters of alpha, beta-olefinically unsaturated monocarboxylic acids with primary hydroxyl groups are hydroxyethyl (meth)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters with secondary hydroxyl groups are 2-hydroxypropyl (meth)acrylate, 2-hydroxybutyl (meth)acrylate and 3-hydroxybutyl (meth)acrylate. Further olefinically unsaturated monomers or adducts with hydroxyl groups may, of course, also be used.

Carboxyl functional olefinically unsaturated monomers are used to introduce carboxyl groups into the (meth)acrylic copolymers. Examples of suitable olefinically unsaturated carboxylic acids include acrylic acid, methacrylic acid, crotonic acid and isocrotonic acid, itaconic acid, maleic acid, fumaric acid and the halfesters of the difunctional acids. Acrylic and methacrylic acid are preferred.

Examples of other additional suitable unsaturated monomers, which contain apart from an olefinic double bond further functional groups are dimethylaminoethyl (meth)acrylate, acetoacetoxyethyl (meth)acrylate, (meth)acrylamide, alkoxy methyl (meth)acrylamides, vinyl silane, methacryloxyethyl trialkoxysilanes, acrylamido 2 - methyl propane, vinyl imidazole.

Unsaturated monomers which, apart from at least one olefinic double bond, contain no further functional groups are, for example, aliphatic esters of olefinically unsaturated carboxylic acids, vinyl ester and /or vinylaromatic hydrocarbons.

Examples of suitable aliphatic esters of olefinically unsaturated carboxylic acids include, in particular, esters of alpha, beta-olefinically unsaturated monocarboxylic acids with aliphatic alcohols. Examples of suitable olefinically unsaturated carboxylic acids are acrylic acid, methacrylic acid, crotonic acid and isocrotonic acid. The alcohols are, in particular, aliphatic monohydric branched or unbranched alcohols having 1-20 carbon atoms in the molecule. Examples of (meth)acrylates with aliphatic alcohols are methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates.

Examples of suitable vinyl esters are vinyl acetate, vinyl propionate and vinyl esters of saturated monocarboxylic acids branched in the alpha position, e.g., vinyl esters of saturated alpha,alpha'-dialkylalkane monocarboxylic acids and vinyl esters of saturated alpha-alkylalkane monocarboxylic acids having in each case 5-13 carbon atoms, preferably, 9-11 carbon atoms in the molecule.

Examples of vinylaromatic hydrocarbons preferably are those having 8-12 carbon atoms in the molecule. Examples of such monomers are styrene, alphamethylstyrene, chlorostyrenes, vinyltoluenes, 2,5-dimethylstyrene, p-methoxystyrene and tertiary-butylstyrene.

The hydroxyl-functional binder component A) suitably comprises about 10 to 100 % by weight solids, preferably 30 to 70 by weight solids, based on the weight solids of the binder of at least one hydroxyl-functional (meth)acrylate copolymer as described above. Preferred (meth)acrylate copolymer comprise:
(a) 10-50 % by weight, preferably 20-35 % by weight of a hydroxy-functional monomer, relative to the total weight of the copolymer; and
(b) 10-90 % by weight, preferably 15 to 60 % by weight, most preferably 20 to 40 % by weight, relative to the total weight of the copolymer, of comonomers selected from the group consisting of alkyl-substituted cycloaliphatic (meth)acrylic comonomers, alkyl-substituted aromatic vinyl comonomer and combinations thereof, wherein the alkyl-substituted cycloaliphatic group has at least nine carbon atoms, preferably 9 to 12 and the alkyl-substituted aromatic vinyl group has at least 10 carbon atoms, preferably 10 to 12 and
(c) 0-80 % by weight, preferably 25 to 50 % by weight, relative to the total weight of the copolymer of other copolymerizable comonomers.

Examples of alkyl-substituted cycloaliphatic acrylate or methacrylates can include, among others, trimethylcyclohexyl methacrylate, t-butyl cyclohexyl methacrylate, isobornyl methacrylate, or combinations thereof.
Preferred alkyl-substituted aromatic vinyl monomers are alkyl-substituted styrene monomers, such as t-butyl styrene. Blends of the above-mentioned comonomers, for example, t-butylstryrene with such monomers as isobornyl-, t-butylcyclohexyl-, or trimethylcyclohexyl(meth)acrylate are also suitable.

Suitable hydroxyl functional (meth)acrylic copolymers are preferably composed of polymerized monomers of styrene, a methacrylate which is either methyl methacrylate, isobornyl methacrylate, cyclohexyl methacrylate or a mixture of these monomers, a second methacrylate monomer which is either n-butyl methacrylate, isobutyl methacrylate or ethyl hexyl methacrylate or a mixture of these monomers and a hydroxy alkyl (meth)acrylate or acrylate that has 1-8 carbon atoms in the alkyl group such as hydroxy ethyl methacrylate, hydroxy propyl methacrylate, hydroxy butyl methacrylate, hydroxy ethyl acrylate, hydroxy propyl acrylate, hydroxy butyl acrylate and the like.
One further preferred (meth)acrylic copolymer contains the following constituents: styrene, methyl methacrylate, isobutyl methacrylate and hydroxy ethyl methacrylate. Another preferred acrylic polymer contains the following constituents: styrene, isobornyl methacrylate, ethyl hexyl methacrylate, hydroxy ethyl methacrylate and hydroxy propyl methacrylate.
Another preferred acrylic contains styrene, methyl methacrylate, isobornyl methacrylate, ethyl hexyl methacrylate, isobutyl methacrylate, and hydroxy ethyl methacrylate. Compatible blends of two of the above (meth)acrylic copolymers can also be used.
Optionally, the (meth)acrylic copolymer can contain about 0.5-2% by weight of acrylamide or methacrylamide such as n-tertiary butyl acrylamide or methacrylamide.

Examples of hydroxyl-functional polyester resins which can be used as binder component A) include all polyester resins which are suited for solvent-based coating compositions, for example, hydroxyl-functional polyesters with a number average molecular weight of 500-10,000 g/mol, preferably, of 1100-8000 g/mol, an acid value of 10-150 mg KOH/g, preferably, of 15-50 mg KOH/g and a hydroxyl value of 40-400 mg KOH/g, preferably, of 50-200 g/mol. The polyesters may be saturated or unsaturated and they may optionally be modified with fatty acids. The polyesters are produced using known processes with elimination of water from polycarboxylic acids and polyalcohols.

Also, usual hydroxy-functional polyurethane resins can be used.

The preferred hydroxyl-functional (meth)acrylate copolymers may be used in combination with other hydroxyl-functional resins. The (meth)acrylate resins may advantageously be used in combination with at least one hydroxyl-terminated polyester oligomer. Preferred polyester oligomers having a weight average molecular weight (Mw) not exceeding 3,000, preferably of 200-2,000, and a polydispersity of less than 1.7.
Useful oligomers include caprolactone oligomers containing terminal hydroxyl groups which may be prepared by initiating the polymerization of caprolactone with a cyclic polyol, particularly a cycloaliphatic polyol, in the presence of a tin catalysts via conventional solution polymerization techniques. Such caprolactone oligomers are well known and described at length in Anderson et al. U.S. Pat. No. 5,354,797.

Other useful oligomers include alkylene oxide polyester oligomers containing terminal hydroxyl groups which may be made by reacting stoichiometric amounts of a cycloaliphatic monomeric anhydride with a linear or branched polyol in solution at elevated temperatures in the presence of a tin catalyst using standard techniques and then capping the acid oligomers so formed with monofunctional epoxies, particularly alkylene oxide.
Cycloaliphatic anhydride monomers such as hexahydrophthalic anhydride and methyl hexahydrophthalic anhydride are typically employed in the alkylene oxide oligomers above. Aliphatic or aromatic anhydrides, such as succinic anhydride or phthalic anhydride may also be used in conjunction with the anhydrides described above. Typically useful linear or branched polyols include, hexanediol, 1,4-cyclohexane dimethanol, trimethylol propane, and pentaerythritol. Useful monofunctional epoxies include alkylene oxides of 2 to 12 carbon atoms. Ethylene, propylene and butylene oxides are preferred although ethylene oxide is most preferred. Other epoxies, such as. Cardura CE5 or Cardura CE10 glycidyl ether may be used in conjunction with the monofunctional epoxies described above. Particularly preferred alkylene oxide oligomers are formed from methyl hexahydrophthalic anhydride; either 1,4-cyclohexanedimethanol, trimethylol propane, or pentaerythritol; and ethylene oxide reacted in stoichiometric amounts.

Furthermore suitable oligomeric polyesters can be prepared using a monoepoxyester and preferably a monoepoxyester of a branched polycarboxylic acid such as a tertiary fatty acid like Cardura^{®} CE10 (versatic acid CE10) or Cardura^{®} CE5 (pivalic acid CE5). Those oligomeric polyesters can be synthesized by various routes, but preferably by employing a ring-opening polycondensation reaction in which a multi-functional polyol (preferably two to four-functional) or a blend of those polyols, so that the average functionality is at least two, are reacted with an anhydride and/or acid anhydride and further with a sufficient amount of a monoepoxyester to convert the acid groups into hydroxyl groups.
Suitable polyols for the above-mentioned synthesis are glycerine, trimethylolpropane, pentaerythritol, neopentyl glycol, ethyleneglycol, and the like. Suitable anhydrides for the above-mentioned synthesis include succinic anhydride, maleic anhydride, phthalic anhydride, hexahydrophthalic anhydride, methylhexahydrophthalic anhydride, and the like.
Suitable acid-anhydrides for the above-mentioned synthesis are trimellitic anhydride, hydrogenated trimellitic anhydride, the Diels-Alder adduct of maleic anhydride with sorbic acid, the hydrogenated Diels-Alder adduct of maleic anhydride and sorbic acid, and the like.
Suitable monoepoxyesters which can be used for the above-mentioned synthesis are the epoxyesters of benzoic acid, acetic acid, privalic acid (Cardura CE5), versatic acid (Cardura CE10), isobutyric acid (Cardura CE4).
Compatible blends of any of the aforementioned oligomers can be used as well in the hydroxyl component A).

Component A) may comprise 10-100 , preferably 30-70% by weight of the at least one (meth)acrylate copolymer and 0-90, preferably 30-70 % by weight of the at least one polyester oligomer. Useful combinations of hydroxyl-functional (meth)acrylic copolymers and hydroxyl-functional polyester oligomers are disclosed, for example, in EP 801 661 and US 6,472,493.

The clear coating compositions can also contain low molecular reactive components, so-called reactive thinners, which are able to react with the cross-linking components. Examples of these are hydroxy- or amino-functional reactive thinners.

The clear coating compositions to be used according to the invention contain polyisocyanates with free isocyanate groups (component B) as cross-linking agents. Examples of the polyisocyanates are any number of organic polyisocyanates with aliphatically, cycloaliphatically, araliphatically and/or aromatically bound free isocyanate groups. The polyisocyanates are liquid at room temperature or become liquid through the addition of organic solvents. At 23°C, the polyisocyanates generally have a viscosity of 1 to 3,500 mPas, preferably of 5 to 3,000 mPas.

The preferred polyisocyanates are polyisocyanates or polyisocyanate mixtures with exclusively aliphatically and/or cycloaliphatically bound isocyanate groups with an average NCO functionality of 1.5 to 5, preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivatives known per se, containing biuret, allophanate, urethane and/or isocyanurate groups of these diisocyanates which, following production, are freed from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethyl-hexamethylene diisocyanate, 1,5-dibutyl-pentamethyldiisocyanate, p- or m-tetramethylxylylene diisocyanate and the appropriate hydrated homologues.

In principle, diisocyanates can be converted by the usual process to higher functional compounds, for example, by trimerization or by reaction with water or polyols, such as, for example, trimethylolpropane or glycerine. The polyisocyanates can also be used in the form of isocyanate-modified resins.

The polyisocyanate cross-linking agents can be used individually or mixed.

The polyisocyanate cross-linking agents are those commonly used in the paint industry, and are described in detail in the literature and are also obtainable commercially.

The isocyanate groups of polyisocyanate crosslinking agent B) may be partially blocked. Low molecular weight compounds containing active hydrogen for blocking NCO groups are known. Examples of these are aliphatic or cycloaliphatic alcohols, dialkylaminoalcohols, oximes, lactams, imides, hydroxyalkyl esters, esters of malonic or acetoacetic acid.
It is especially preferred that the polyisocyanate or polyisocyanate mixture comprises at least one low viscous polyisocyanate. The term low viscous polyisocyanates as used here and hereinafter should be taken to mean polyisocyanates having a viscosity of equal to or below 300 mPas, preferably of equal to or below 200 mPas, for example a viscosity of 10 to 300 mPas, preferably of 10 to 200 mPas. Examples of those low viscous polyisocyanates are commercially available polyisocyanates, e.g. Desmodur 3400 from Bayer. The low viscous polyisocyanates can be used alone or in combination with other polyisocyanates with higher viscosity of , for example, 300 to 3000 mPas. The use of those low viscous polyisocyanates as crosslinking agent strengthens the positive effects achieved with the present invention. It also leads to a more favourable balance between spray viscosity and content of volatile organic compounds (VOC) of the clear coat coating composition.
Polyisocyanate component B) can comprise, e.g. 20-80 % by weight solids of low viscous polyisocyanates and 80-20 % by weight solids of other polyisocyanates, relative to the solids content of component B2).
Although not preferred, the polyisocyanate crossliking agent B) can be used in combination with co-crosslinkers, e.g., in combination with melamine resins and/or completely blocked polyisocyanates.

According to the invention at least one epoxy-functional silane compound of Formula (I) is used as component C).

Preferred compounds of the formula (I) are those in which X is 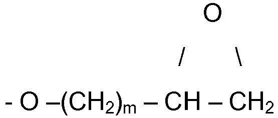 with m being 1 - 4.

Compounds in which R1, R2 and R3 mutually independently mean identical or different alkoxy groups having 1-4 , preferably 1, 2 or 3 carbon atoms are likewise preferred. Particularly preferred alkoxy groups are methoxy, ethoxy and isopropoxy groups.

Examples of particularly suitable epoxy-functional silane compounds of the general formula (I) are (3-glycidoxypropyl)trimethoxysilane, (3-glycidoxypropyl)triethoxysilane, (3-glycidoxypropyl)triisopropoxysilane, beta-(3,4-epoxycyclohexyl)ethyltrimethoxysilane and beta-(3,4-epoxycyclohexyl)ethyltriethoxysilane. Silanes with methoxy groups, such as for example (3-glycidoxypropyl)trimethoxysilane and beta-(3,4-epoxycyclohexyl)ethyltrimethoxysilane are particularly preferred here.

It is most preferred to use (3-glycidoxypropyl)trimethoxysilane.

Epoxy-functional silane compounds which may be used are also obtainable as commercial products, for example under the name Dynasylan Glymo from Degussa, Silquest A-187 and Silquest A-186 from GE Silicones and A-186 and A187 from ACC Silicones.

The active hydrogen containing, in particular hydroxy-functional binder component A) and the cross-linking agents B) are used in in such quantity ratios that the equivalent ratio of hydroxyl groups of component A) to the functional groups of the cross-linking agent B) is 5 : 1 to 1 : 5, for example, preferably, 3 : 1 to 1 : 3, particularly preferably, 1.5 : 1 to 1 : 1.5. If further hydroxy-functional binders and reactive thinners are used, their reactive functions should be taken into consideration when calculating the equivalent ratio.

The clear coating compositions may contain in addition organic solvents and conventional coating additives. The solvents may originate from the preparation of the binders or they may be added separately. They are organic solvents typical of those used for coatings and well known to the skilled person.

The additives are the conventional additives, which may be used, in the coating sector in clear coats. Examples of such additives include light protecting agents, e.g., based on benzotriazoles and HALS compounds (hindered amine light stabilizers), leveling agents based on (meth)acrylic homopolymers or silicone oils, rheology-influencing agents, such as, fine-particle silica or polymeric urea compounds, anti-foaming agents, wetting agents, curing catalysts for the cross-linking reaction, for example, organic metal salts, such as, dibutyltin dilaurate, zinc naphthenate and compounds containing tertiary amino groups such as triethylamine for the hydroxyl/isocyanate reaction.

Preferred clear coat coating compositions which are to be applied in step 2 of the process according to the invention comprise:
A) at least one hydroxyl-functional (meth)acrylate resin, optionally in combination with at least one hydroxyl-functional oligomeric polyester,
B) at least one polyisocyanate and
C) at least one epoxy-functional silane of the general Formula (I) as defined above.

Further preferred clear coat coating compositions which are to be applied in step 2 of the process according to the invention comprise:
A) at least one hydroxyl-functional (meth)acrylate resin, optionally in combination with at least one hydroxyl-functional oligomeric polyester,
B) at least one low-viscosity polyisocyanate and
C) at least one epoxy-functional silane of the general Formula (I) as defined above.

Preferred hydroxyl-functional (meth)acrylate resins and oligomeric polyesters are those as described already above. Preferred (meth)acrylate copolymers comprise:
(a) 10-50 % by weight, preferably 20-35 % by weight of a hydroxy-functional monomer, relative to the total weight of the copolymer; and
(b) 10-90 % by weight, preferably 15 to 60 % by weight, most preferably 20 to 40 % by weight, relative to the total weight of the copolymer, of comonomers selected from the group consisting of alkyl-substituted cycloaliphatic (meth)acrylic comonomers, alkyl-substituted aromatic vinyl comonomer and combinations thereof, wherein the alkyl-substituted cycloaliphatic group has at least nine carbon atoms, preferably 9 to 12 and the alkyl-substituted aromatic vinyl group has at least 10 carbon atoms, preferably 10 to 12 and
(c) 0-80 % by weight, preferably 25 to 50 % by weight, relative to the total weight of the copolymer of other copolymerizable comonomers.
Preferred alkyl-substituted aromatic vinyl monomers are alkyl-substituted hydroxyl-functional (meth)acrylate resins
Preferably the clear coat coating compositions are substantially free of polyether polyols.

It has been found that, by using the epoxy-functional silane compounds C) in the clear coat coating composition of the multilayer structure, it is possible to achieve both greatly improved humidity resistance and adhesion properties, i.e. greatly improved interlayer adhesion between the individual layers and very good cohesion within the water-borne base coat layer, e.g. after humidity/temperature strain. It is assumed here that epoxy-functional silane C) also diffuses into the water-borne base coat layer across the boundary layer between clear coat and base coat and thus also contributes to a distinct improvement in interlayer adhesion between a prior coating, for example a filler layer, and the water-borne base coat layer. The water-borne base coat layer exhibits very good cohesion, even when applied in relatively thick films of for example 25 µm, as are required for the application of solid water-based base coat compositions.

The individual steps of the process according to the invention are explained in greater detail below.
In the multilayer coating process according to the invention, in step 1 a base coat layer of a water-based base coat composition is applied onto an optionally precoated substrate. Suitable substrates are metal and plastics substrates, in particular the substrates known in the automotive industry, such as for example iron, zinc, aluminium, magnesium, stainless steel or the alloys thereof, together with polyurethanes, polycarbonates or polyolefins.
In the case of vehicle body or vehicle body part coating, the water-based base coat compositions are applied, preferably by means of spraying, onto substrates pre-coated in conventional manner.
The substrates, in particular the vehicle bodies or parts thereof are usually already pre-coated before application of the base coat composition. The prior coating may comprise a coating of a filler coating composition, such as is conventionally used in vehicle coating. The filler coating compositions may also perform the function of a filler-primer or priming filler. The fillers contain the conventional constituents, such as for example binders, additives, fillers, organic solvents and/or water. For example, the fillers may contain binder systems based on chemically crosslinking binder systems, such as epoxy resins and polyamine curing agents or hydroxy-functional resins and polyisocyanate crosslinking agents. The fillers used may be solvent-based or water-based.
In addition to the filler coating composition or instead of it, the prior coating may also comprise, preferably beneath the filler layer, coatings of electrodeposited primers, other primers or further coating compositions.

The filler layer may be cured or dried before application of the water-borne base coat composition. Wet-on-wet application is, however, also possible.

The water-borne base coat composition may also be applied onto an intact existing or original coating.
The water-based base coat composition to be applied in step 1) comprises effect or solid-colour base coat compositions as are conventionally used in vehicle coating.

The water-based base coat compositions contain the conventional constituents of a water-based pigmented base coat composition: color-imparting and/or special effect-imparting pigments, one or more binders, water and optionally at least one of the following constituents: crosslinking agents, fillers, conventional coating additives and organic solvents.

Examples of binders are conventional film-forming, water-dilutable binders familiar to the person skilled in the art, such as water-dilutable polyester resins, water-dilutable (meth)acrylic copolymer resins or water-dilutable polyester/(meth)acrylic copolymer hybrids and water-dilutable polyurethane resins or polyurethane/(meth)acrylic copolymer hybrids. These may be reactive or non-functional resins.

The water-based base coat coating compositions may be physically drying or chemically crosslinking. Accordingly, the water-based coating compositions may contain crosslinking agents, such as, for example, free polyisocyanates. Selection of the optionally used crosslinking agents depends on the type of crosslinkable groups in the binders and is familiar to the person skilled in the art.
Preferably the water-based base coating compositions comprise water-dilutable polyurethane resins, optionally in combination with other water-dilutable resins, e.g. water-dilutable (meth)acrylic copolymers, and with dispersants. Examples of water-dilutable polyurethane resins are those, for example, with a number average molecular weight Mn of 500 to 500 000 g/mol, preferably, of 1100 to 300 000 g/mol, most preferably, of 5000 to 300 000 g/mol, an acid value of 10 to 100 mg KOH/g, preferably of 20 to 80 mg KOH/g. Appropriate polyurethane resins which may be used are, for example, prepared by reacting compounds which are reactive with respect to isocyanate groups and polyisocyanates having at least 2 free isocyanate groups per molecule. The thus obtained polyurethane resins can still be subjected to chain extension to increase the molecular weight. For example, NCO-functional polyurethane prepolymers can be reacted with compounds, which are reactive with respect to isocyanate groups. Compounds, which are reactive with respect to isocyanate groups, are in particular compounds with hydroxyl and/or secondary and/or primary amino groups. OH-functional polyurethane prepolymers can be chain extended for example with polyisocyanates.

Preferably the water-based base coating compositions comprise at least one water-reducible polyurethane/polyurea resin based on polycarbonate and/or polyester polyols. Most preferred the water-based base coating compositions comprise the at least one water-reducible polyurethane/polyurea resin based on polycarbonate and/or polyester polyols in combination with at least one aqueous (meth)acrylic latex. Preferably the aqueous (meth)acrylic latex is prepared by multistage emulsion polymerization in the aqueous phase, comprising the steps:
1) free-radical polymerization of a mixture A of olefinically unsaturated, free-radically polymerizable monomers, optionally comprising at least one monomer with at least one acid group and at least one olefinically polyunsaturated monomer, in the aqueous phase,
2) free-radical polymerization of at least one mixture B of olefinically unsaturated, free-radically polymerizable monomers, optionally comprising at least one monomer with at least one acid group and at least one olefinically polyunsaturated monomer in the presence of the product obtained in process step 1),
wherein the ratio by weight of mixture A to the at least one mixture B is from 15:85 to 85:15 and wherein mixture A or the at least one mixture B or both mixture A and the at least one mixture B comprise the at least one monomer with at least one acid group and wherein mixture A or the at least one mixture B or both mixture A and the at least one mixture B comprise the at least one olefinically polyunsaturated monomer.
Useful water-reducible polyurethane/polyurea resins based on polycarbonate polyols and on mixtures of polycarbonate and polyester polyols are described, for example in EP 427 979 and EP 669 352. Useful aqueous (meth)acrylic lattices are described, for example in WO 2006/118974.
The polyurethane/polyurea resins and aqueous (meth)acrylic lattices can be used in combination with pigment dispersants, in particular pigment dispersions based on graft copolymers. The graft copolymers have weight average molecular weights of about 5,000-100,000 and a polymeric backbone and macromonomer side chains attached to the backbone, wherein the polymeric backbone is hydrophobic in comparison to the side chains and contains polymerized ethylenically unsaturated hydrophobic monomers and the side chains are hydrophilic macromonomers attached to the backbone at a single terminal point and contain polymerized ethylenically unsaturated monomers and 2-100% by weight, based on the weight of the graft copolymer, of polymerized ethylenically unsaturated acid containing monomers and have a weight average molecular weight of about 1,000-30,000. Those pigment dispersions are described, for example in US 5,231,131.

The water-based base coat coating compositions contain conventional coating pigments, for example, special effect pigments (effect-imparting pigments) and/or color-imparting pigments selected from among white, colored and black pigments.

Special effect pigments impart to a coating a special effect, e.g. a color flop and/or lightness flop dependent on the angle of observation. Examples of those pigments are conventional effect pigments such as metal pigments. Example of metal pigments are those made from aluminum, copper or other metals, interference pigments such as, for example, metal oxide coated metal pigments, for example, iron oxide coated aluminum, coated mica such as, for example, titanium dioxide coated mica, pigments which produce a graphite effect, iron oxide in flake form, liquid crystal pigments, coated aluminum oxide pigments, coated silicon dioxide pigments. Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, perylene pigments.

The water-based base coat coating compositions may contain conventional coating additives in conventional quantities, for example, of 0.1 to 5 wt.%, relative to the solids content thereof. Examples are neutralizing agents, antifoaming agents, wetting agents, adhesion promoters, catalysts, levelling agents, anticratering agents, thickeners, rheology control agents, e.g. layered silicates and light stabilizers.

The water-based base coat coating compositions may contain conventional coating solvents, for example, in a proportion of preferably less than 20 wt.%, particularly preferably of less than 15 wt%.
Once the water-borne base coat composition has been applied and optionally dried or cured, the clear coat coating composition is applied in step 2 of the process of the present invention. The clear coat coating composition may here be applied onto the base coat layer either after drying or curing or after briefly flashing off, for example, at room temperature.
The resultant coatings may be cured at room temperature or be forced at higher temperatures, for example of up to 80°C, preferably at 40 to 60°C. They may, however, also be cured at higher temperatures of for example 80-160°C. Curing temperatures are determined by the field of use as well as the by the type of crosslinker. The coating compositions are applied by conventional processs, preferably by means of spray application.
The process according to the invention can be used in automotive and industrial coating, however particularly advantageously in vehicle repair coating. Curing temperatures from 20° C to 80° C, for example, particularly from 40° C to 60° C are used in vehicle repair coating. The coating compositions can also be used advantageously for coating large vehicles and transportation vehicles, such as, trucks, busses and railroad cars, where typically curing temperatures of up to 80°C or higher than 80°C are used. Furthermore, the coating compositions can be used for coating any industrial goods other than motor vehicles.
The invention will be explained in more detail on the basis of the examples below. All parts and percentages are on a weight basis unless otherwise indicated.

### EXAMPLES

### Example 1

### Preparation of clear coat coating compositions

Clear coat 8600, a commercial clear coat from Spiess Hecker, based on a combination of (meth)acrylic polyols and hydroxy-terminated polyester oligomers, has been used as clear coat base component.

Desmodur® 3390, a HDI-trimer based polyisocyanate from Bayer has been used as activator (cross-linking agent). The activator has been modified with 3 and 6 % by weight solids of a commercially available epoxy-functional silane (Dynasylan® Glymo from Degussa), relative to the total amount of activator, which corresponds to 1.5 and 3 % by weight solids of the epoxy-functional silane, relative to the sum of the solids content of the clear coat base component and the activator. The non-modified activator, which does not contain the epoxy-functional silane, has been used for comparison. The activators were formulated with the ingredients shown in Table 1. The amount of the solvents was adjusted in order to keep the solids (70 %) constant.

**Table 1**

| | Composition | Examples | | |
|---|---|---|---|---|
| | | Comp. Activator 1 (% by weight) | Activator 1 (% by weight) | Activator 2 (% by weight) |
| Polyisocyanate | Desmodur® 3390 (Bayer) | 78.23 | 78.23 | 78.23 |
| Solvents | Butylacetate Xylene | 10.22 | 8.79 | 7.36 |
| | | 11.21 | 9.64 | 8.07 |
| Epoxy-funct. silane | Dynasylan® Glymo (Degussa) | / | 3 | 6 |
| Catalyst | DBTDL (10% in butyl acetate) | 0.34 | 0.34 | 0.34 |

The clear coat 8600 (base component) was activated with activators 1 and 2 and the comparative activator 1 (3:1 volume ratio base component: activator) to form clear coats 1 and 2 (CC 1, CC 2) according to the invention and comparative clear coat 1 (comp. CC 1).

### Application of the clear coat coating compositions

The clear coats 1 and 2 and comparative clear coat 1 were applied over commercial red pearl water-based base coats (Cromax® Pro Bernsteinrot / 548, from DuPont; dry film thickness 18 µm - BC 1) in a resulting dry film thickness of 50 µm and baked for 30 minutes at 60°C. Properties of these clear coat formulations are shown in Table 2.

The clear coats 1 and 2 and comparative clear coat 1 were applied over silver metallic basecoats (Cromax® Pro Silbersee / LY7W from DuPont; dry film thickness 10 µm - BC 2) in a resulting dry film thickness of 50 µm and baked for 30 minutes at 60°C. Properties of these clear coat formulations are shown in Table 3. The clear coats 1 and 2 and comparative clear coat 1 were applied over red basecoats (Cromax® Pro Rouge Vif / 075 from DuPont; dry film thickness of 21 µm - BC 3) in a resulting dry film thickness of 50 µm and baked for 30 minutes at 60°C. Properties of these clear coat formulations are shown in Table 4.

**Table 2**

| | Examples | | |
|---|---|---|---|
| | BC 1 / Comp. CC 1 | BC 1 / CC 1 | BC 1 / CC 2 |
| Initial test | | | |
| Chip | 7 | 7 | 7 |
| HPC | 10% | 10% | 10% |
| Dry adhesion | 10 / 10 | 10 / 10 | 10 / 10 |

| Texts after 1 week in humidity cabinet | | | |
|---|---|---|---|
| 30 min recovery | | | |
| HPC | 100% | 70% | 10% |
| Wet adhesion | 1(2) / 1(2) | 3(2) / 1(2) | 10 / 9(2) |
| 4 hours recovery | | | |
| HPC | 60% | 60% | 50% |
| Wet adhesion | 1(2) / 1(2) | 1(2) / 1(2) | 8(2) / 8(2) |
| 24 hours recovery | | | |
| HPC | 1% | 1% | 1% |
| Wet adhesion | 10 / 10 | 9(2) / 9(2) | 10 / 10 |

**Table 3**

| | Examples | | |
|---|---|---|---|
| | BC 2 / Comp. CC 1 | BC 2 / CC 1 | BC 2 / CC 2 |
| Initial tests | | | |
| Chip | 7 | 7 | 7 |
| HPC | 10% | 10% | 10% |
| Dry adhesion | 9(2) / 9(2) | 10 / 10 | 10 / 10 |

| Test after 1 week in humidity cabinet | | | |
|---|---|---|---|
| 30 min recovery | | | |
| HPC | 30% | 30% | 10% |
| Wet adhesion | 3(2) / 1(2) | 8(2) / 5(2) | 7(2) / 4(2) |
| 4 hours recovery | | | |
| HPC | 60% | 60% | 10% |
| Wet adhesion | 0(2) / 0(2) | 3(2) / 1(2) | 4(2) / 4(2) |
| 24 hours recovery | | | |
| HPC | 1% | 5% | 1% |
| Wet adhesion | 9(2) / 9(2) | 9(2) / 9(2) | 9(2) / 9(2) |

**Table 4**

| | Examples | | |
|---|---|---|---|
| | BC 3 / Comp. CC 1 | BC 3 / CC 1 | BC 3 / CC 2 |
| Initial tests | | | |
| Chip | 7 | 7 | 7 |
| HPC | 20% | 10% | 10% |
| Dry adhesion | 9(2) / 9(2) | 10 / 10 | 10 / 10 |

| Texts after 1 week in humidity cabinet | | | |
|---|---|---|---|
| 30 min recovery | | | |
| HPC | 60% | 10% | 10% |
| Wet adhesion | 0(2) / 0(2) | 7(2) / 7(2) | 9(2) / 9(2) |
| 4 hours recovery | | | |
| HPC | 80% | 30% | 30% |
| Wet adhesion | 0(2) / 0(2) | 5(2) / 5(2) | 8(2) / 7(2) |
| 24 hours recovery | | | |
| HPC | 5% | 1% | 1% |
| Wet adhesion | 5(2) / 3(2) | 9(2) / 9(2) | 10 / 10 |

### Example 2

### Preparation of clear coat coating compositions

Clear coat coating compositions have been prepared as in Example 1 with the only difference that Desmodur® 3400, a HDI-uretdione based polyisocyanate from Bayer has been used as activator (cross-linking agent).

The activators were formulated with the ingredients shown in Table 5. The amount of the solvents was adjusted in order to keep the solids (70 %) constant.

**Table 5**

| | Composition | Examples | | |
|---|---|---|---|---|
| | | Comp. Activator 2 (% by weight) | Activator 3 (% by weight) | Activator 4 (% by weight) |
| Polyisocyanate | Desmodur® 3400 | 70 | 70 | 70 |
| Solvents | Butylacetate Xylene | 14.15 | 12.72 | 11.29 |
| | | 15.51 | 13.94 | 12.37 |
| Organosilane | Dynasylan® Glymo (Degussa) | / | 3 | 6 |
| Catalyst | DBTDL (10% in butylacetate) | 0.34 | 0.34 | 0.34 |

The clear coat 8600 (base component) was activated with activators 3 and 4 and the comparative activator 2 (3:1 volume ratio base component: activator) to form clear coats 3 and 4 (CC 3, CC 4) according to the invention and comparative clear coat 2 (comp. CC 2).

### Application of the clear coat coating compositions

The clear coats 3 and 4 and comparative clear coat 2 were applied over red basecoats (Cromax Pro Rouge Vif / 075 from DuPont; dry film thickness of 25 µm - BC 3) in a resulting dry film thickness of 50 µm and baked for 30 minutes at 60°C. Properties of these clear coat formulations are shown in Table 6.

The clear coats 3 and 4 and comparative clear coat 2 were applied over silver metallic basecoats (Cromax Pro Silbersee / LY7W from DuPont, dry film thickness of 10 µm - BC 2) in a resulting dry film thickness of 50 µm and baked for 30 minutes at 60°C. Properties of these clear coat formulations are shown in Table 7.

**Table 6**

| | Examples | | |
|---|---|---|---|
| | BC 3 / Comp. CC 2 | BC 3 / CC3 | BC 3 / CC4 |
| Initial tests | | | |
| Chip | 7 | 7 | 7 |
| HPC | 10% | 10% | 10% |
| Dry adhesion | 10 / 10 | 10 / 10 | 10 / 10 |

| Texts after 1 week in humidity cabinet | | | |
|---|---|---|---|
| 30 min recovery | | | |
| HPC | 10% | 1% | 1% |
| Wet adhesion | 10 / 8(6) | 9(2) / 9(2) | 10 / 10 |
| 4 hours recovery | | | |
| HPC | 10% | 2% | 1% |
| Wet adhesion | 8(6) / 8(6) | 10 / 10 | 9(2) / 9(2) |
| 24 hours recovery | | | |
| HPC | 1% | 1% | 1% |
| Wet adhesion | 10 / 10 | 9(2) / 9(2) | 10 / 10 |

**Table 7**

| | Examples | | |
|---|---|---|---|
| | BC2 / Comp. CC 2 | BC 2 / CC 3 | BC 2 / CC 4 |
| Initial tests | | | |
| Chip | 7 | 7 | 7 |
| HPC | 10% | 10% | 10% |
| Dry adhesion | 10 / 10 | 10 / 10 | 10 / 10 |

| Tests after 1 week in humidity cabinet | | | |
|---|---|---|---|
| 30 min recovery | | | |
| HPC | 20% | 5% | 5% |
| Wet adhesion | 8(2) / 6(2) | 8(2) / 7(2) | 7(2) / 5(2) |
| 4 hours recovery | | | |
| HPC | 30% | 5% | 10% |
| Wet adhesion | 2(2) / 1(2) | 9(2) / 9(2) | 9(2) / 9(2) |
| 24 hours recovery | | | |
| HPC | 1% | 1% | 1% |
| Wet adhesion | 10 / 10 | 10 / 10 | 10 / 10 |

### Example 3

### Preparation of clear coat coating compositions

Clear coat coating compositions have been prepared as in Example 1 with the only difference that a polyisocyanate mixture of Desmodur® 3400, a HDI-uretdione based polyisocyanate from Bayer and Desmodur® 4470, a polyisocyanate from Bayer has been used as activator (cross-linking agent).

The activators were formulated with the ingredients shown in Table 8. The amount of the solvents was adjusted in order to keep the solids (70 % by weight) constant.

**Table 8**

| | Composition | Examples | |
|---|---|---|---|
| | | Comp. Activator 3 (% by weight) | Activator 5 (% by weight) |
| Polyisocyanate compounds | Desmodur® 4470 / Desmodur® 3400 (Bayer) 30 : 70 (on weight basis) | 49 | 49 |
| | | 30 | 30 |
| Solvents | Butylacetate Xylene | 9.86 | 6.99 |
| | | 10.80 | 7.67 |
| Organosilane | Dynasylan® Glymo (Degussa) | / | 6 |
| Catalyst | DBTDL (10% in butylacetate) | 0.34 | 0.34 |

The clear coat 8600 (base component) was activated with activator 5 and comparative activator 3 (3:1 volume ratio base component: activator) to form clear coat 5 (CC 5) according to the invention and comparative clear coat 3 (comp. CC 3).

### Application of the clear coat coating compositions

The clear coat 5 and comparative clear coat 3 were applied over red basecoats (Cromax ®Pro Rouge Vif / 075 from DuPont; dry film thickness 21 µm - BC 3) in a resulting dry film thickness of 50 µm and baked for 30 minutes at 60°C. Properties of these clear coat formulations are shown in Table 9 .

The clear coat 5 and comparative clear coat 3 were applied over silver metallic basecoats (Cromax ®Pro Silbersee / LY7W from DuPont; dry film thickness 10 µm - BC 2) in a resulting dry film thickness of 50 µm and baked for 30 minutes at 60°C. Properties of these clear coat formulations are shown in Table 10.

**Table 9**

| | Examples | |
|---|---|---|
| | BC3 / Comp. CC 3 | BC3 / CC5 |
| Initial test | | |
| Chip | 7 | 7 |
| HPC | 5% | 5% |
| Dry adhesion | 10 / 10 | 10 / 10 |

| Tests after 1 week in humidity cabinet | | |
|---|---|---|
| 30 min recovery | | |
| HPC | 20% | 10% |
| Wet adhesion | 8(2) / 6(2) | 9(2) / 9(2) |
| 4 hours recovery | | |
| HPC | 20% | 10% |
| Wet adhesion | 5(2) / 2(2) | 9(2) / 9(2) |
| 24 recovery | | |
| HPC | 5% | 1% |
| Wet adhesion | 9(2) / 8(2) | 9(2)/ 9(2) |

**Table 10**

| | Examples | |
|---|---|---|
| | BC 2 / Comp. CC 3 | BC 2 / CC 5 |
| Initial tests | | |
| Chip | 7 | 7 |
| HPC | 10% | 10% |
| Dry adhesion | 10 / 10 | 10 / 10 |

| Test after 1 week in humidity cabinet | | |
|---|---|---|
| 30 min recovery | | |
| HPC | 30% | 20% |
| Wet adhesion | 1(2) / 1(2) | 9(2) / 8(2) |
| 4 hours recovery | | |
| HPC | 40% | 40% |
| Wet adhesion | 4(2) / 3(2) | 10 / 9(2) |
| 24 recovery | | |
| HPC | 1% | 1% |
| Wet adhesion | 3(2) / 1(2) | 10 / 10 |

The results clearly show that the multilayer coating prepared according to the invention has improved adhesion properties as can be seen on the basis of the wet adhesion and high pressure cleaning resistance (HPC) after humidity cabinet. In particular important is a rush recovering after strain in humidity cabinet. An improved recovering has been observed still after 4 hours and even after 30 minutes, e.g. HPC values of 10% versus 1 % (Table 6) and HPC values of 20% versus 5% (Table 7).

### Test methods

### Panel preparation

All multilayer systems were prepared in the same way. Metal panels coated with electro-deposit primer (10 x 30 cm) were used for all tests. A commercial 2K primer has been applied on the panels, baked for 30 minutes at 60°C and sanded. A commercial 1 K waterborne basecoat has been applied on top of the primer. For solid colors the dry film thickness varied between 20-25 µm. For metallic colors and pearls the dry film thickness varied respectively between 10-15 µm and 15-20 µm. The basecoat was flashed till flat before applying the clear coat. Commercial 2K clear coats were applied over the basecoat and baked 30 minutes at 60°C. The dry film thickness of the clear coats varied between 45-60 µm. All coated panels were aged one week prior to testing.

### Chip resistance (Chip)

The test has been performed on an Erichsen VDA 508 apparatus according to a test method, which is conform customer's specifications (Reference : Méthode d'essai du group PSA, no. D241312).

500 g of gravel is projected with a pressure of 1.5 bar under an angle of 45° on the coated panel. This is repeated. A scotch tape is placed over the chipped area and rubbed with a rubber eraser to ensure good contact. In the next step the tape is pulled away from the tester to remove any loose film particles.

The chipping performance is rated from 0 (total failure) till 10 (no failure) according the density and size of the chips, which are described by photographic representations.

### High pressure cleaning resistance (HPC)

This test is performed according to a test method, which is based on Volvo specifications (STD 423-0015).

Before testing high pressing cleaning resistance, which reflects adhesion, an initial paint damage is made on the test panel by scribing two 0.5 mm scribe lines using a scribing tool with a flat shaving steel. The scribed lines are made down to the substrate, at right angles to each other to create a cross.

Water with a temperature of 50°C is sprayed with a pressure of 150 bar on the damaged panel (φ = 4 cm) during 30 seconds. The distance between the gun and the panel amounts to 15 cm.

When the test is completed, the panel is wiped dry and the extension of the paint damage is rated. The % of paint remaining expresses the high pressure cleaning resistance. The numbers in the tables refer to % of removed paint (0% is the best).

### Dry and wet adhesion

This test method is based on ASTM D2247-92 and ASTM D3359-92A.

Dry and wet adhesion are evaluated with the cross-cut tape test. A grid hatch is made with a manual cross cut tester, where the lines are 1 mm apart. The panels are brushed lightly to remove any detached flakes or ribbons of coating. A scotch tape is placed over the grid and smoothed into place by a finger. To ensure good contact with the film the tape is rubbed with a rubber eraser. Within 60 to 120 seconds of application, the tape is removed by seizing the free end and pulling it off rapidly back upon itself at as close to an angle of 45 degrees as possible. The dry adhesion is rated a first time from 0 (total failure) till 10 (no failure) according the amount of damage, which is described by photographic representations. Again pressure-sensitive tape is placed over the same intersection, smoothed into place by a finger and rubbed with a rubber eraser to ensure good contact. Within 60 to 120 seconds of application, the tape is removed by seizing the free end and pulling it off rapidly in opposite direction at as close to an angle of 0 degrees as possible. The dry adhesion is rated a second time from 0 (total failure) till 10 (no failure) according the amount of damage, which is described by photographic representations.

For the evaluation of wet adhesion the same method is used but here the panels are placed for one week in an enclosed chamber, containing heated, saturated mixture of water and water vapor, prior to testing. The panels are allowed to recover 30 minutes, 4 hours and 24 hours before they are rated in the same way as above. The type of failure has also been evaluated (number in brackets in the wet adhesion line):
1 : substrate / paint failure
2 : primer / topcoat failure
3: basecoat / clear coat failure
4: primer / primer failure
5: primer cohesion failure
6 : basecoat cohesion failure

## Claims

1. A process for the multilayer coating of substrates comprising the following steps:
1. Applying a base coat layer of a water-based base coat composition containing color-imparting and/or special effect-imparting pigments, one or more binders, water and optionally at least one of the following constituents: crosslinking agents, fillers, conventional coating additives and organic solvents,
onto an optionally pre-coated substrate,
2. Applying a clear coat layer of a transparent clear coat coating composition onto the base coat layer and
3. Curing the clear coat layer, wherein the transparent clear coat coating composition being an organic solvent-based coating composition comprising:
A) at least one binder with functional groups containing active hydrogen,
B) at least one polyisocyanate cross-linking agent with free isocyanate groups, and
C) at least one epoxy-functional silane of the general Formula (I): 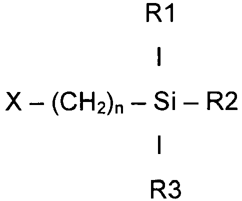
X denoting the residues 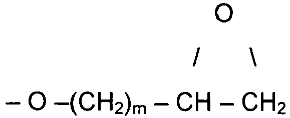 with m being 1-4, or 3,4 - epoxycyclohexyl,
R1, R2, R3 mutually independently meaning identical or different organic residues with 1 to 30 carbon atoms per molecule, providing that at least one of the residues is an alkoxy group with 1 to 4 carbon atoms and
n is 2, 3 or 4.

2. The process according to claim 1, wherein the transparent clear coat coating composition comprises 0.25 to 5.0 % by weight solids of the epoxy-functional silane component C), relative to the sum of the solids content of component A) and component B).

3. The process according to claim 2, wherein the transparent clear coat coating composition comprises 1.0 to 3.0 % by weight solids of the epoxy-functional silane component C), relative to the sum of the solids content of component A) and component B).

4. The process according to any one of claims 1 to 3, wherein n is 2 or 3.

5. The process according to any one of claims 1 to 4, wherein R1, R2 and R3 mutually independently mean identical or different alkoxy groups having 1-4 carbon atoms.

6. The process according to any one of claims 1 to 5, wherein the binder A) comprises at least one hydroxy-functional (meth)acrylic copolymer.

7. The process according to any one of claims 1 to 6, wherein the binder A) comprises at least one hydroxy-functional (meth)acrylic copolymer in combination with at least one hydroxy-functional oligoester.

8. The process according to any one of claims 1 to 7, wherein the at least one polyisocyanate cross-linking agent B) comprises a low-viscous polyisocyanate with a viscosity of 10 to 300 mPas.

9. The process according to any one of claims 1 to 8, wherein the water-based base coat composition is applied onto a filler layer.

10. The process according to any one of claims 1 to 9, wherein the water-based base coat composition is applied onto a filler layer of a filler coating composition comprising a hydroxy-functional binder component and a polyisocyanate cross-linking component.

11. The process according to any one of claims 1 to 10, wherein the substrate comprises vehicle bodies or parts thereof.

12. Use of the process according to any one of claims 1 to 11 in vehicle repair coating.

## Patentansprüche

1. Verfahren für die mehrschichtige Beschichtung von Substraten, umfassend die folgenden Schritte:
1. das Aufbringen einer Basislackschicht aus einer Basislackzusammensetzung auf Wasserbasis, die farbverleihende und/oder Spezialeffekt verleihende Pigmente, ein oder mehrere Bindemittel, Wasser und wahlweise mindestens einen der folgenden Bestandteile: Vernetzungsmittel, Füllstoffe, herkömmliche Beschichtungszusatzmittel und organische Lösungsmittel enthält, auf ein wahlweise vorbeschichtetes Substrat,
2. das Aufbringen einer Klarlackschicht aus einer transparenten Klarlackbeschichtungszusammensetzung auf die Basislackschicht und
3. das Aushärten der Klarlackschicht, wobei die transparente Klarlackbeschichtungszusammensetzung eine organische Beschichtungszusammensetzung auf Lösungsmittelbasis ist, die Folgendes umfasst:
A) mindestens ein Bindemittel mit funktionellen Gruppen, die aktiven Wasserstoff enthalten,
B) mindestens ein Polyisocyanatvernetzungsmittel mit freien Isocyanatgruppen und
C) mindestens ein epoxyfunktionelles Silan der allgemeinen Formel (I): 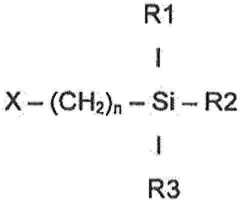
wobei X die Reste 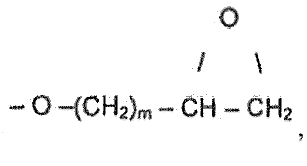 wobei m 1 - 4 beträgt, oder 3,4-Epoxycyclohexyl bedeutet,
R1, R2, R3 gegenseitig unabhängig identische oder verschiedene organische Reste mit 1 bis 30 Kohlenstoffatomen pro Molekül bedeuten, vorausgesetzt, dass mindestens einer der Reste eine Alkoxygruppe mit 1 bis 4 Kohlenstoffatomen ist und
n 2, 3 oder 4 beträgt.

2. Verfahren nach Anspruch 1, wobei die transparente Klarlackbeschichtungszusammensetzung 0,25 bis 5,0 Gew.-% Feststoffe der epoxyfunktionellen Silankomponente C), mit Bezug auf die Summe des Feststoffgehalts von Komponente A) und Komponente B) umfasst.

3. Verfahren nach Anspruch 2, wobei die transparente Klarlackbeschichtungszusammensetzung 1,0 bis 3,0 Gew.-% Feststoffe der epoxyfunktionellen Silankomponente C), mit Bezug auf die Summe des Feststoffgehalts von Komponente A) und Komponente B) umfasst.

4. Verfahren nach einem der Ansprüche 1 bis 3, wobei n 2 oder 3 beträgt.

5. Verfahren nach einem der Ansprüche 1 bis 4, wobei R1, R2 und R3 gegenseitig unabhängig identische oder verschiedene Alkoxygruppen bedeuten, die 1 bis 4 Kohlenstoffatome aufweisen.

6. Verfahren nach einem der Ansprüche 1 bis 5, wobei das Bindemittel A) mindestens ein hydroxyfunktionelles (Meth)acrylcopolymer umfasst.

7. Verfahren nach einem der Ansprüche 1 bis 6, wobei das Bindemittel A) mindestens ein hydroxyfunktionelles (Meth)acrylcopolymer in Kombination mit mindestens einem hydrofunktionellen Oligoester umfasst.

8. Verfahren nach einem der Ansprüche 1 bis 7, wobei mindestens ein Polyisocyanatvernetzungsmittel B) ein niedrigviskoses Polyisocyanat mit einer Viskosität von 10 bis 300 mPas umfasst.

9. Verfahren nach einem der Ansprüche 1 bis 8, wobei die Basislackzusammensetzung auf Wasserbasis auf eine Füllstoffschicht aufgebracht wird.

10. Verfahren nach einem der Ansprüche 1 bis 9, wobei die Basislackzusammensetzung auf Wasserbasis auf eine Füllstoffschicht einer Füllstoffbeschichtungszusammensetzung aufgebracht wird, die eine hydroxyfunktionelle Bindemittelkomponente und eine Polyisocyanatvernetzungskomponente umfasst.

11. Verfahren nach einem der Ansprüche 1 bis 10, wobei das Substrat Fahrzeugkarosserien oder Teile davon umfasst.

12. Verwendung des Verfahrens nach einem der Ansprüche 1 bis 11 in einer Fahrzeugreparaturbeschichtung.

## Revendications

1. Procédé de revêtement multicouche de substrats comprenant les étapes suivantes consistant à :
1. appliquer une couche de revêtement de base d'une composition aqueuse de revêtement de base contenant des pigments conférant une couleur et/ou conférant un effet spécifique, un ou plusieurs liants, de l'eau et facultativement au moins un des consistants suivants : des agents de réticulations, des charges, des additifs de revêtement classiques et des solvants organiques, sur un substrat facultativement pré-enduit,
2. appliquer une couche transparente de revêtement d'une composition de revêtement limpide transparente sur la couche de revêtement de base, et
3. durcir la couche de revêtement transparente, la composition de revêtement limpide transparente étant une composition de revêtement à base de solvant organique comprenant :
A) au moins un liant ayant des groupes fonctionnels contenant de l'hydrogène actif,
B) au moins un agent de réticulation de type polyisocyanate ayant des groupes isocyanates libres, et
C) au moins un silane à fonctionnalité époxy de formule générale (I): 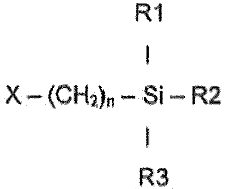
X représente les résidus 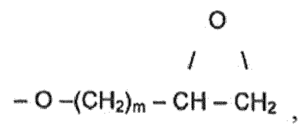 où m vaut de 1 à 4, ou 3,4-époxycyclohexyle,
R1, R2, R3 signifiant indépendamment et mutuellement des résidus organiques identiques ou différents comprenant de 1 à 30 atomes de carbone par molécule, à condition qu'au moins un des résidus soit un groupe alcoxy comprenant de 1 à 4 atomes de carbone, et
n valant 2, 3 ou 4.

2. Procédé selon la revendication 1, dans lequel la composition de revêtement limpide transparente comprend de 0,25 à 5,0 % en poids de matières solides du composant silane à fonctionnalité époxy C), par rapport à la somme de la teneur en matières solides du composant A) et du composant B).

3. Procédé selon la revendication 2, dans lequel la composition de revêtement limpide transparente comprend de 1,0 à 3,0 % en poids de matières solides du composant silane à fonctionnalité époxy C), par rapport à la somme de la teneur en matières solides du composant A) et du composant B).

4. Procédé selon l'une quelconque des revendications 1 à 3, dans lequel n vaut 2 ou 3.

5. Procédé selon l'une quelconque des revendications 1 à 4, dans lequel R1, R2 et R3 signifient indépendamment et mutuellement des groupes alcoxy identiques ou différents comprenant de 1 à 4 atomes de carbone.

6. Procédé selon l'une quelconque des revendications 1 à 5, dans lequel le liant A) comprend au moins un copolymère (méth)acrylique à fonctionnalité hydroxy.

7. Procédé selon l'une quelconque des revendications 1 à 6, dans lequel le liant A) comprend au moins un copolymère (méth)acrylique à fonctionnalité hydroxy en combinaison avec au moins un oligoester à fonctionnalité hydroxy.

8. Procédé selon l'une quelconque des revendications 1 à 7, dans lequel l'au moins un agent de réticulation de type polyisocyanate B) comprend un polyisocyanate faiblement visqueux ayant une viscosité de 10 à 300 mPas.

9. Procédé selon l'une quelconque des revendications 1 à 8, dans lequel la composition aqueuse de revêtement de base est appliquée sur une couche de charge.

10. Procédé selon l'une quelconque des revendications 1 à 9, dans lequel la composition aqueuse de revêtement de base est appliquée sur une couche de charge d'une composition de revêtement de charge comprenant un composant liant à fonctionnalité hydroxy et un composant de réticulation de type polyisocyanate.

11. Procédé selon l'une quelconque des revendications 1 à 10, dans lequel le substrat comprend des corps de véhicules ou des parties de ceux-ci.

12. Utilisation du procédé selon l'une quelconque des revendications 1 à 11, dans un revêtement de réparation de véhicule.
